# EUROPEAN PATENT SPECIFICATION

(11) **EP 2 361 500 B1**
(45) Date of publication and mention of the grant of the patent: **16.11.2016**
(21) Application number: 11382046.8
(22) Date of filing: 21.02.2011
(51) Int. Cl.: A01K 5/02

(54) **Adjustment device for adjusting the height position of the hopper for a livestock feeder**
Einstellungsvorrichtung zur Einstellung der Höhenposition eines Trichters für Viehfutter
Dispositif de réglage pour régler la position de la hauteur d'une trémie pour mangeoire pour bétail

(30) Priority: 23.02.2010 ES 201030154 U
(43) Date of publication of application: 31.08.2011
(73) Proprietor: Rotecna, S.A., 25310 Agramunt (ES)
(72) Inventor: Romeu Guardia, Gener, 25310 Agramunt (ES)
(74) Representative: Sugrañes Patentes y Marcas

(56) References cited:
- EP-A1- 0 658 303
- US-A- 2 273 616

## Description

### Technical Field of the Invention

The object of the invention is an adjustment device for adjusting the height position of the hopper for a livestock feeder, particularly applicable to a livestock weaning feeder, of the type comprising a central pole on which a sleeve for supporting the hopper is assembled with longitudinal sliding capacity.

### Background of the Invention

Livestock weaning feeders formed by a circular plastic plate on which there is arranged a grid generally provided with interwoven rods determining sectors for the animals to access the feed deposited on the plate, and on which there is arranged a suspended hopper storing the feed which is deposited by gravity on the plate are known.

In order to support the hopper so that its height position can be adjusted and to thus be able to control the amount of the feed which is deposited on the plate when the feed that had previously been unloaded by the hopper and was placed immediately under its discharge opening has been removed, in a known variant the feeder is provided with a long vertical tube, coaxial with the hopper, on which a cylindrical tubular body provided with two stepped projections is fixed at a certain height, in which the respective steps located at the same level are diametrically opposed. A sleeve can be arranged on said tubular body for supporting the hopper, provided with a series of radial arms which attach it to the inner wall of the hopper, which is provided with two vertical recessed boxes intended for resting on the pair of selected steps at the same height. In order to secure the firm assembly of the sleeve on the tubular body, a spring clip provided with two facing fingers which, in the operating position traverse the walls of the tubular body and of the sleeve, provided for such purpose with respective through holes in its side walls, is used such that the boxes are secured in their position. An embodiment of this type is described in document ES1034223U.

A first objective of the invention is to offer an alternative to the known adjustment devices.

Another objective of the invention is also an adjustment device which can be more easily handled and which overcomes the drawbacks resulting from the use of a hard-to-reach spring clip and which requires at least two hands for changing the height of the hopper: one for squeezing the clip and another for moving the sleeve, while at the same time keeping the clip in the squeezed position.

Document EP-A-0685303 describes an adjustment device according to the preamble of claim 1.

### Disclosure of the Invention

The adjustment device of the invention is of the type comprising a post on which a sleeve for supporting the hopper is assembled with longitudinal sliding capacity.

The device is essentially characterized in that the post is provided with an outer screw thread on which a displacement ring is coupled by screwing, which ring is provided with a corresponding inner screw thread, and in that the ring is in turn provided with a lower tubular portion having an open cross-section, provided with an inner annular groove in which a projecting outer flange of the sleeve for supporting the hopper is inserted, being suspended from the ring, whereby when the ring is displaced downwards or upwards by screwing it on or unscrewing it from the post, it drives the sleeve in its movement.

According to another feature of the invention, the outer screw thread of the post and the inner screw thread of the ring have a series of protuberances regularly distributed along the thread pitch which offer certain resistance to the involuntary rotation of the ring with respect to the post.

According to another feature of the invention, the inner annular groove of the lower tubular portion of the displacement ring has an annular length less than 180°.

In a practical embodiment, the displacement ring is externally provided with a series of essentially radial tabs intended for facilitating its handling during the screwing and unscrewing operations.

According to a preferred embodiment, the projecting outer flange of the sleeve for supporting the hopper is loosely housed in the inner annular groove of the lower tubular portion of the displacement ring, whereby the sleeve can rotate freely and without transmitting its rotational movement to the displacement ring from which it is suspended.

### Brief Description of the Drawings

The attached drawings illustrate by way of non-limiting example a variant of the adjustment device according to the invention. Specifically:
Figure 1 is a perspective view of the displacement ring of the adjustment device;
Figure 2 is a perspective view of the adjustment device with all its components duly coupled; and
Figure 3 is a longitudinal section view of the adjustment device depicted in Figure 2.

### Detailed Description of a Variant of the Invention

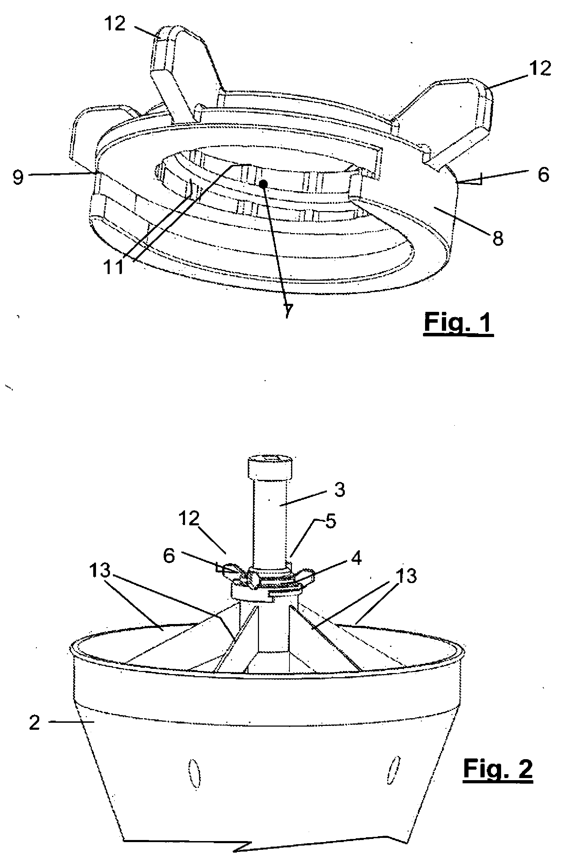

Figure 1 depicts the displacement ring 6 of the adjustment device 1 according to a variant of the invention. Said ring 6 is formed by a single part in which an upper portion provided with an inner screw thread 7, and a lower portion formed by the lower tubular portion 8, are distinguished.

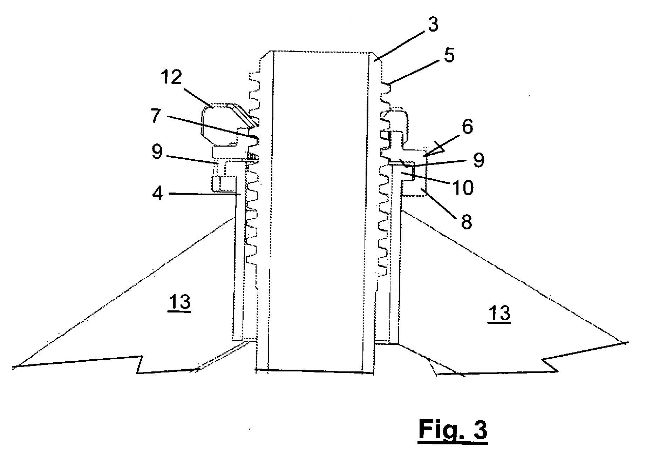

While the upper portion is sized to be coupled by screwing on the outer screw thread 5 of a post 3 (see Figures 2 and 3), the lower tubular portion 8 is especially suitable for driving a tubular sleeve for supporting the hopper in its upward or downward movement.

In effect, it can be seen in Figures 2 and 3 that the hopper 2 is connected to the post 3 by means of a tubular sleeve 4 from which radial arms 13 which are firmly attached to the inner of the hopper 2 by known means extend, such that the sleeve 4 and the hopper 2 form an assembly which is simultaneously displaced and to the same extent when the sleeve 4 is displaced along the post 3.

With respect to the connection between the displacement ring 6 and the sleeve 4, the former is provided with an inner annular groove 9 in its lower tubular portion in which the projecting outer flange 10 of the sleeve 4 is inserted such that the latter is suspended from of the displacement ring 6. Therefore, when the ring 6 is displaced downwards or upwards by screwing it on or unscrewing it from the post 3, it drives the sleeve in its movement 4.

Here it must be pointed out that the height of the inner annular groove 9 is intentionally greater than that of the outer flange 10 of the sleeve 4, whereby there is certain looseness between these two components of the adjustment device 1 which favors relative movement, being able to rotate the sleeve 4 with respect to the ring 6. Therefore if the animals hit against the hopper 2 and apply a momentum on it which urges it to rotate about its longitudinal axis, said rotational movement is transmitted to the sleeve 4 but not to the displacement ring 6, and therefore the height at which the ring 6 is arranged with respect to the post 3 is not altered.

In order to assure that the ring 6 does not accidentally or non-intentionally rotate, the outer screw thread 5 of the post 3 and the inner screw thread 7 of the ring 6 have a series of protuberances 11 (of which only those corresponding to the inner screw thread of the ring are visible) regularly distributed along the thread pitch which offer certain resistance to the involuntary rotation of the ring 6 with respect to the post 3. Therefore, and despite the fact that the rotation of the hopper 2 can be transmitted in an attenuated manner to the ring 6, a situation which can occur when food residues, dirt or other external materials are deposited on the inner annular groove 9 which can cause unwanted friction between the sleeve 4 and the ring 6, the protuberances 11 offer sufficient resistance to the rotation of the ring 6 so that the latter does not rotate enough around the post 3 so as to alter its height in an unwanted manner.

To facilitate handling the ring 6 during the screwing and unscrewing operations around the post 3, it is observed that in the variant of interest depicted, said displacement ring 6 is provided with a series of tabs 12 extending outwardly in a radial direction.

To place the device 1 in operating form prior to screwing the ring 6 on the post 3, it is simply necessary to insert the projecting outer flange 10 of the sleeve 4 in the inner annular groove 9 of the mentioned ring until the through holes of both are axially aligned. Once this operation is performed, the sleeve 4 is suspended from the ring 6 and the latter can be screwed on the post 3 which will traverse the assembly formed by the ring 6 and the sleeve 4, as shown in Figure 3.

In the variant depicted, the lower tubular portion 8 of the ring 6, and thereby the corresponding inner annular groove 9 extending along its entire length, has an open cross-section which means that the contour of its cross section is open. and is provided with an annular length less than 180°, therefore forming the said contour a segmental arch or an arch less than a semicircle. The outwardly projecting outer flange 10 of the sleeve 4 can thus be inserted in the inner annular groove 9, the sleeve 4 being displaced in a direction transverse to the axis of the ring 6. Despite the fact that there are not retaining means to prevent the sleeve 4 separating from the ring 6, once the post 3 has traversed them both it will be impossible to remove the sleeve 4 from its insertion position.

## Claims

1. An adjustment device (1) for adjusting the.height position of the hopper (2) for a livestock feeder, particularly applicable to a livestock weaning feeder, of the type comprising a post (3) on which a sleeve (4) for supporting the hopper is assembled with longitudinal sliding capacity, said post being provided in its outer surface with an outer screw thread (5) on which a displacement ring (6) is coupled by screwing, which ring (6) is provided in its inner surface with a corresponding inner screw thread (7), the device being **characterized in that** the ring is in turn provided with a lower tubular portion (8) having an open cross-section, provided with an inner annular groove (9) in which an outwardly projecting outer flange (10) of the sleeve for supporting the hopper is inserted, being suspended from the ring, whereby when the ring is displaced downwards or upwards by screwing it on or unscrewing it from the post, it drives the sleeve in its movement.

2. The device (1) according to claim 1, **characterized in that** the outer screw thread (5) of the post (3) and the inner screw thread (7) of the ring (6) have a series of protuberances (11) regularly distributed along the thread pitch which offer certain resistance to the involuntary rotation of the ring with respect to the post.

3. The device (1) according to any one of the previous claims, **characterized in that** the contour of the inner annular groove (9) of the lower tubular portion (8) of the displacement ring forms a segmental arch.

4. The device (1) according to any one of the previous claims, **characterized in that** the displacement ring (6) is externally provided with a series of essentially radial tabs (12) intended for facilitating its handling during the screwing and unscrewing operations.

5. The device (1) according to any one of the previous claims, **characterized in that** the projecting outer flange (10) of the sleeve (4) for supporting the hopper (2) is loosely housed in the inner annular groove (9) of the lower tubular portion (8) of the displacement ring (6), whereby the sleeve can rotate freely and without transmitting its rotational movement to the displacement ring from which it is suspended.

## Patentansprüche

1. Einstellungsvorrichtung (1) zur Einstellung der Höhenposition eines Trichters (2) für Viehfutter, insbesondere für einen Futterspender für das Absetzen von Nutztieren anwendbar, der Art umfassend einen Pfosten (3), auf dem eine Hülse (4) zur Abstützung des Trichters mit Gleitfähigkeit in Längsrichtung montiert ist, wobei der genannte Pfosten an seiner äußeren Oberfläche mit einem äußeren Schraubengewinde (5) versehen ist, auf welchem ein Verstellring (6) durch Schraubverbindung gekoppelt ist, welcher Ring (6) an seiner inneren Oberfläche mit einem entsprechenden inneren Schraubengewinde (7) versehen ist, wobei die Vorrichtung **dadurch gekennzeichnet ist, dass** der Ring wiederum mit einem unteren rohrförmigen Teil (8) mit einem offenen Querschnitt versehen ist, welcher mit einer inneren Ringnut (9) versehen ist, in welcher einen nach außen vorstehenden äußeren Flansch (10) der Hülse zur Abstützung des Trichters eingeführt wird, sodass sie vom Ring hängt, wodurch, wenn der Ring nach unten oder nach oben mittels Aufschrauben auf oder Abschrauben von dem Pfosten bewegt wird, dieser die Hülse mit seiner Bewegung mitnimmt.

2. Vorrichtung (1) nach Anspruch 1, **dadurch gekennzeichnet, dass** das äußere Schraubengewinde (5) des Pfostens (3) und das innere Schraubengewinde (7) des Ringes (6) eine Reihe von Vorsprüngen (11) aufweisen, welche regelmäßig entlang des Gewindegangs verteilt sind, welche einen gewissen Widerstand gegen die unbeabsichtigte Drehung des Ringes in Bezug auf den Pfosten bieten.

3. Vorrichtung (1) nach einem der vorhergehenden Ansprüche, **dadurch gekennzeichnet, dass** die Kontur der inneren Ringnut (9) des unteren rohrförmigen Teils (8) des Verstellringes einen Segmentbogen bildet.

4. Vorrichtung (1) nach einem der vorhergehenden Ansprüche, **dadurch gekennzeichnet, dass** der Verstellring (6) äußerlich mit einer Reihe von im Wesentlichen radialen Laschen (12) versehen ist, welche dafür bestimmt sind, dessen Handhabung während der Aufschraub- und Abschraubvorgänge zu erleichtern.

5. Vorrichtung (1) nach einem der vorhergehenden Ansprüche, **dadurch gekennzeichnet, dass** der vorspringende äußere Flansch (10) der Hülse (4) zur Abstützung des Trichters (2) locker in der inneren Ringnut (9) des unteren rohrförmigen Teils (8) des Verstellringes (6) aufgenommen ist, wodurch sich die Hülse frei drehen kann und ohne ihre Drehbewegung auf den Verstellring, von welchem sie hängt, zu übertragen.

## Revendications

1. Dispositif de réglage (1) pour régler la position de la hauteur d'une trémie (2) pour mangeoire pour bétail, particulièrement applicable à une mangeoire de sevrage pour bétail, du type comprenant un montant (3) sur lequel un manchon (4) pour soutenir la trémie est monté avec une capacité de coulissement longitudinal, ledit montant étant pourvu sur sa surface externe d'un filetage externe (5) sur lequel un anneau de déplacement (6) est couplé par vissage, ledit anneau (6) est pourvu sur sa surface interne d'un filetage intérieur (7) correspondant, le dispositif étant **caractérisé en ce que** l'anneau est lui-même pourvu d'une partie tubulaire inférieure (8) ayant une section transversale ouverte, pourvue d'une fente annulaire intérieure (9) dans laquelle une bride extérieure faisant saillie vers l'extérieur (10) du manchon pour soutenir la trémie est insérée, étant suspendue à l'anneau, où lorsque l'anneau est déplacé vers le bas ou vers le haut par vissage sur le montant ou par dévissage du montant, il entraîne le manchon dans son mouvement.

2. Dispositif (1) selon la revendication 1, **caractérisé en ce que** le filetage externe (5) du montant (3) et le filetage intérieur (7) de l'anneau (6) possèdent une série de protubérances (11) régulièrement réparties le long du pas de filetage lesquelles opposent une certaine résistance à la rotation involontaire de l'anneau par rapport au montant.

3. Dispositif (1) selon l'une quelconque des revendications précédentes, **caractérisé en ce que** le contour de la fente annulaire intérieure (9) de la partie tubulaire inférieure (8) de l'anneau de déplacement forme un arc en segment.

4. Dispositif (1) selon l'une quelconque des revendications précédentes, **caractérisé en ce que** l'anneau de déplacement (6) est pourvu à l'extérieur d'une série de pattes essentiellement radiales (12) destinées à faciliter son maniement lors des opérations de vissage et de dévissage.

5. Dispositif (1) selon l'une quelconque des revendications précédentes, **caractérisé en ce que** la bride extérieure faisant saillie (10) du manchon (4) pour soutenir la trémie (2) est logée de manière libre dans la fente annulaire intérieure (9) de la partie tubulaire inférieure (8) de l'anneau de déplacement (6), où le manchon peut tourner librement sans transmettre son mouvement rotatif à l'anneau de déplacement auquel il est suspendu.
